# EUROPÄISCHE PATENTSCHRIFT

(11) **EP 2 445 752 B1**
(45) Veröffentlichungstag und Bekanntmachung des Hinweises auf die Patenterteilung: **01.04.2015**
(21) Anmeldenummer: 09776800.6
(22) Anmeldetag: 22.06.2009
(51) Int. Cl.: B60P 7/13, B64D 9/00

(54) **RIEGELELEMENT**
LOCKING BAR ELEMENT
ÉLÉMENT DE VERROUILLAGE

(43) Veröffentlichungstag der Anmeldung: 02.05.2012
(73) Patentinhaber: Telair International GmbH, 83714 Miesbach (DE)
(72) Erfinder: HUBER, Thomas, 83727 Schliersee (DE); HOLZNER, Richard, 83071 Stephanskirchen (DE)
(74) Vertreter: Bohnenberger, Johannes
(86) Internationale Anmeldenummer: PCT/EP2009/004486
(87) Internationale Veröffentlichungsnummer: WO 2010/149181

(56) Entgegenhaltungen:
- WO-A1-2004/054876
- US-A- 4 372 715
- US-A- 4 379 668
- US-A- 4 401 286

## Beschreibung

Die Erfindung betrifft ein Riegelelement zum Sichern von Containern, Paletten oder dergleichen Frachtstücken in einem Laderaum eines Flugzeugs nach dem Oberbegriff des Patentanspruchs 1, einen Frachtraumboden eines Flugzeugs mit solchen Riegelelementen nach Anspruch 11 sowie die Verwendung solcher Riegelelemente nach Anspruch 12.

Frachtstücke müssen in die Längs- (x), Quer (y)- und Höhenrichtung (z) in einem Laderaum des Flugzeugs gesichert sein. Hierzu weisen nach militärischen Normen gefertigte Container oder Paletten Eingriffsausnehmungen auf, in die Riegelnasen der Riegelelemente greifen. Es ist wichtig, dass die Riegelnasen möglichst einfach und ohne die Gefahr eines Verklemmens der Riegelnasen aus den Eingriffsausnehmungen entfernt werden können, insbesondere wenn auf die Frachtstücke äußere Kräfte entlang einer Halterichtung der Riegelnasen wirken.

Bekannt sind Riegelhaken, die in der x-y-Ebene verschwenkt werden, so dass deren endseitige Riegelnasen in die Eingriffsausnehmungen eingreifen. Beim Entfernen der Riegelnasen aus der Eingriffsausnehmung zur Entsicherung der Container können die Riegelnasen verklemmen und in der Eingriffsausnehmung der Container hängenbleiben. Bei einer Verklemmung können die Riegelhaken also nicht mehr vollständig in die Ruhepositionen bewegt werden und der Container wird nicht freigegeben. Diese Verklemmung kann oft nur sehr aufwendig und mit großem Kraftaufwand gelöst werden. Z.B. kann die Verklemmung dazu führen, dass die Frachtstücke entgegen einer Ausladefahrtrichtung bewegt werden müssen, damit die Verklemmung der Riegelnasen aufgehoben werden kann. Dokumente US4372715 und US4401286 zeigen bekannte Riegelelemente. US4372715 wird als rächstlegender Stand der Technik angesehen.

Der Erfindung liegt die Aufgabe zugrunde ein Riegelelement aufzuzeigen, bei dem die Gefahr, dass dessen Riegelnasen beim Entfernen der Riegelnasen aus den Eingriffsausnehmungen der Frachtstücke verklemmen, deutlich verringert ist.

Diese Aufgabe wird durch ein Riegelelement nach Anspruch 1 gelöst.

Ein wesentlicher Punkt der Erfindung ist, dass Anschlagflächen, die mit einem Anschlagrand der Eingriffsausnehmungen der Frachtstücke in Eingriff bringbar sind, beim Entfernen der Riegelnasen aus den Eingriffsausnehmungen sich von den gegenüber liegenden Anschlagrändern entfernen. Der von den Riegelnasen in Halterichtung der Riegelnasen beanspruchte Platz verringert sich also und somit wird die Gefahr des Verklemmens der Riegelnasen in den Eingriffsausnehmungen deutlich verringert gegenüber bekannten Riegelelementen. Auch wenn eine Kraft auf das Frachtstück wirkt, ist die Gefahr einer Verklemmung eines Paar Riegelnasen eines Riegelelements der vorliegenden Erfindung deutlich gegenüber bisher bekannten Riegelelementen verringert.

Bei einer Ausführungsform sind die Riegelnasen eines Paares derart gegenläufig miteinander verbunden sind, dass beim Bewegen der einen Riegelnase die andere Riegelnase mitgenommen wird. Dadurch wird sichergestellt, dass beide Riegelnasen eines Paares sich stets gleichzeitig bewegen. Zudem können die beiden Riegelnasen viele Teile des Riegelelements gemeinsam nutzen.

In einer weiteren Ausführungsform umfassen die Riegelnasen Schwenkhebel mit Halteelementen, an den die Anschlagflächen ausgebildet sind. Diese Art der Lagerung ist - im Gegensatz zu einer Linearlagerung - sehr einfach.

Vorzugsweise sind die Riegelnasen in einer senkrechten Ebene verschwenkbar. Dadurch können die Riegelnasen derart abgesenkt werden, dass sie von Frachtstücken überfahren werden können. Zudem kann das Riegelelement im Laderaum an dort üblicherweise randseitig vorgesehenen Schienen befestigt bleiben, auch wenn es nicht benötigt wird, ohne dass das Riegelelement die Bewegung und/oder Sicherung der Frachtstücke behindert.

Das Riegelelement kann eine Feststellvorrichtung zum Feststellen der Riegelnasen in der Verriegelungsstellung und/oder der Ruhestellung umfassen. Durch diese Feststellvorrichtung wird die unbeabsichtigte Bewegung der Riegelnasen aus einer Stellung in die jeweils andere verhindert. In einer Ausführungsform umfasst die Feststellvorrichtung mindestens ein Feststellfederelement zum Einrasten der Feststellvorrichtung in der Verriegelungsstellung und/oder Ruhestellung der Riegelnasen. Dies hat u.a. den Vorteil, dass die Riegelnasen ohne weiteres Zutun in der Verriegelungsstellung und/ oder Ruhestellung festgestellt werden.

Das Riegelelement weist in einer weiteren Ausführungsform mindestens ein Bewegungsfederelement auf zur Bewegung der Riegelnasen aus der Verriegelungsstellung in die Ruhestellung. Hierdurch werden die Riegelnasen, wenn sie nicht beispielsweise durch eine Feststellvorrichtung in der Arbeitsposition festgestellt sind, in die Ruhestellung abgesenkt, was Containern erlaubt, die Riegel zu überfahren.

In einer weiteren Ausführungsform hat das Riegelelement mindestens eine Anlaufschräge in Längsrichtung des Flugzeugs (x). Die Anlaufschrägen sorgen dafür, dass das Frachtstück nicht die Riegelnasen berührt, wenn es unterhalb einer normalen Bewegungsebene auf das Riegelelement bewegt wird. Die Anlaufschrägen setzen die horizontale Bewegung des Frachtstücks in eine vertikale Bewegung um, und heben somit das Frachtstück gegeben falls an, was Schäden am Riegelelement verhindert.

Die Riegelnasen können derart ausgebildet sein, dass Teile einer zweiten Riegelnase in einem Zwischenraum einer ersten Riegelnase derart aufnehmbar sind, dass die Anschlagflächen in der Verriegelungsposition parallel und fluchtend angeordnet sind. Hierdurch wird nicht nur der in Halterichtung beanspruchte Platz der Riegelnasen verringert, sondern die gemeinsame Ausdehnung der beiden Riegelnasen in jede Richtung verringert sich.

Der Frachtraumboden eines Flugzeugs kann an den Rändern des Frachtraumbodens befestigte und in Längsrichtung des Flugzeugs (x) verlaufende Schienen und Riegelelemente, die an den Schienen befestigt sind, zum Sichern von Containern auf dem Frachtraumboden umfassen, wobei die Riegelelemente solche zum Sichern von Containern nach militärischen Normen der hier beschriebenen Art umfassen. Weiterhin sind auf einem Boden des Frachtraumes befestigte X/Z-Riegelelemente zum Sichern von Containern nach zivilen Normen vorgesehen. Dadurch können sowohl gleichzeitig als auch in aufeinanderfolgenden Transportflügen Container nach militärischen wie auch zivilen Normen gesichert werden.

Riegelelemente der in der vorliegenden Anmeldung beschriebenen Art zum Sichern von Containern nach militärischen Normen in einer Längsrichtung des Flugzeugs (x) an den Rändern eines Frachtraumes eines Flugzeugs können zusammen mit Riegelelementen zum Sichern von Containern nach zivilen Normen auf dem Frachtraumboden verwendet werden. Dadurch können sowohl gleichzeitig als auch in aufeinanderfolgenden Transportflügen Container nach militärischen als auch zivilen Normen gesichert werden.

Weitere Ausführungsformen der Erfindung ergeben sich aus den Unteransprüchen. Nachfolgend wird die Erfindung anhand von Zeichnungen eines Ausführungsbeispiels näher erläutert. Hierbei zeigen
- Fig. 1: eine schematische Seitenansicht zweier Riegelnasen eines Riegelelements in der Verriegelungsstellung in einer Eingriffsausnehmung eines Frachtstücks,
- Fig. 2: eine schematische Seitenansicht der Anordnung nach Fig. 1 in der Ruhestellung außerhalb einer Eingriffsausnehmung eines Frachtstücks,
- Fig. 3: eine perspektivische Ansicht eines Riegelelements mit einem Paar von Riegelnasen in Verriegelungsstellung,
- Fig. 4: eine perspektivische Ansicht des Riegelelements nach Fig. 3, das an einer Schiene befestigt ist,
- Fig. 5: eine Seitenansicht des Riegelelements nach Fig. 3/4 in Verriegelungsstellung,
- Fig. 6: eine weitere Seitenansicht des Riegelelements nach Fig. 5 von der entgegen gesetzten Seite,
- Fig. 7: das Riegelelement nach Fig. 5 in Ruhestellung,
- Fig. 8: eine Ansicht des Riegelelements entlang der Linie IIX-IIX aus Fig. 6,
- Fig. 9: eine Ansicht des Riegelelements entlang der Linie IX-IX aus Fig. 5,
- Fig. 10: eine Aufsicht auf einen Laderaumboden mit gesicherten Frachtstücken, und
- Fig. 11: einen Querschnitt der Anordnung aus Fig. 10 entlang der Linie XI-XI eines Laderaumbodens.

Bei der nachfolgenden Beschreibung werden für gleiche und gleich wirkende Teile dieselben Bezugsziffern verwendet.

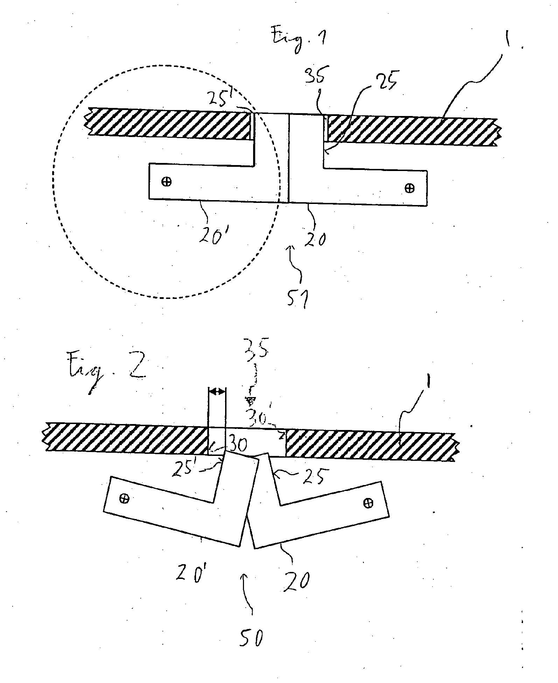

Fig. 1 zeigt eine schematische Seitenansicht zweier Riegelnasen 20, 20' in Verriegelungsstellung 51 in einer Eingriffsausnehmung 35 eines Frachtstücks 1. Die Riegelnasen 20, 20' haben jeweils eine Anschlagfläche 25, 25', die in der Verriegelungsstellung 51 in einander entgegen gesetzte Richtungen zeigen. Jede der beiden Riegelnasen 20, 20' ist mit der Anschlagfläche 25, 25' an einen Anschlagrand 30, 30' der Eingriffsausnehmung 35 des Frachtstücks, Palette oder dergleichen Fracht 1 bringbar. Das bedeutet, dass die jeweilige Anschlagfläche 25, 25' sich in der Verriegelungsstellung in der Nähe des jeweiligen Anschlagrands 30, 30' des Frachtstücks 1 befindet. Typischerweise sichern die Riegelnasen 20, 20' die Frachtstücke in einer Halterichtung, die der Längsrichtung des Flugzeugs (x) entspricht.

Fig. 2 zeigt eine schematische Seitenansicht der Riegelnasen 20, 20', die in der Ruhestellung 50 aus der Eingriffsausnehmung 35 des Frachtstücks herausbewegt wurden. Bei der Bewegung der Riegelnasen 20, 20' aus der Verriegelungsstellung 51 in die Ruhestellung 50 entfernen sich beide Anschlagflächen 25, 25' von den gegenüber liegenden Anschlagrändern 30, 30' der Eingriffsausnehmung 35. Hierdurch verringert sich der in Halterichtung benötigte Platz der Riegelnasen 20, 20'.

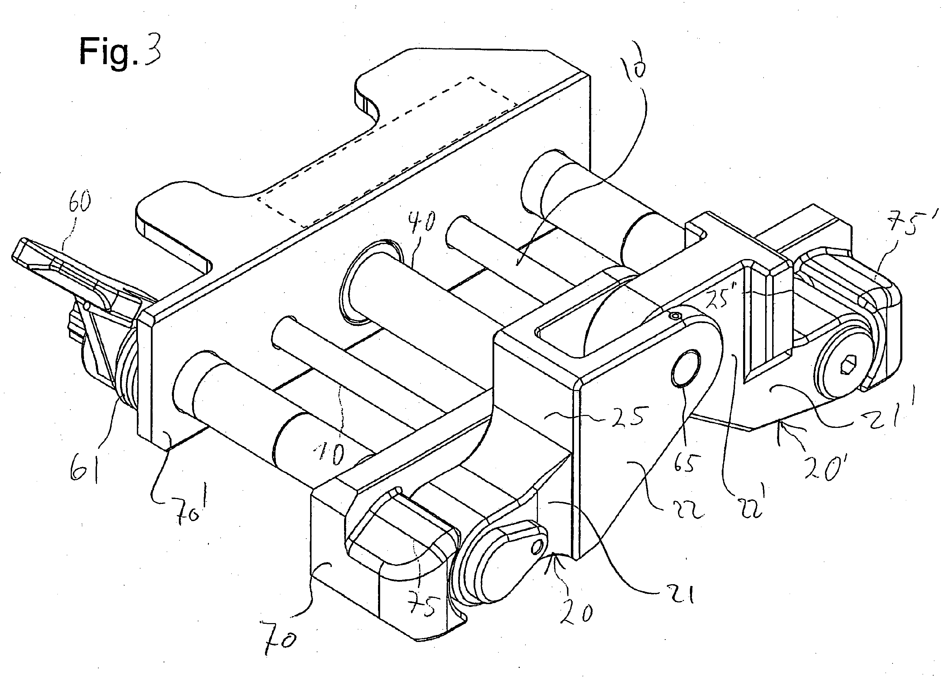

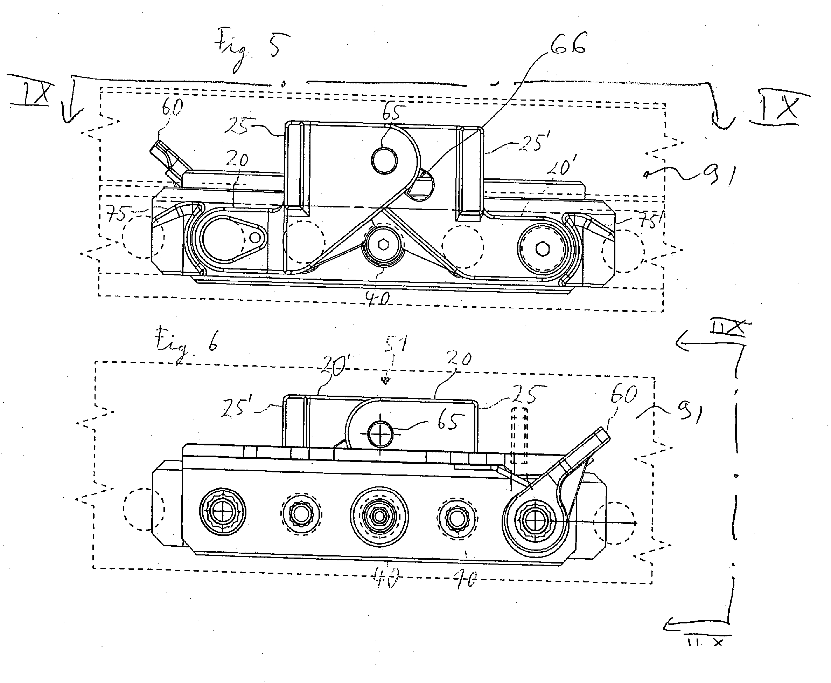

Fig. 3 zeigt eine perspektivische Ansicht eines Riegelelements. Das Riegelelement umfasst das Paar Riegelnasen 20, 20'. Die Riegelnasen 20, 20' können Schwenkhebel 21, 21' mit Halteelementen 22, 22' umfassen, an denen die Anschlagflächen 25, 25' ausgebildet sind. Die Riegelnasen 20, 20' in Fig. 3 befinden sich in Verriegelungsstellung 51. Sie können von der Verriegelungsstellung in die Ruhestellung 50 bewegt werden. Weiterhin sind die Riegelnasen 20, 20' eines Paares durch einen Verbindungsstift 65 und eine Kulissenausnehmung 66 (Fig. 5) derart gegenläufig miteinander verbunden, dass beim Bewegen der einen Riegelnase 20, 20' die andere Riegelnase 20, 20' mitgenommen wird.

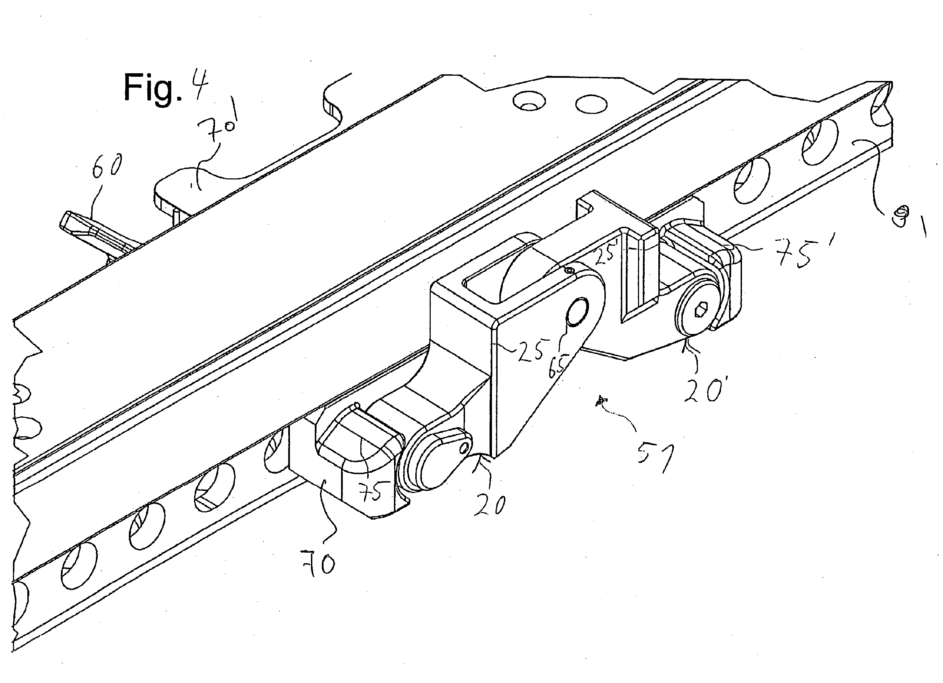

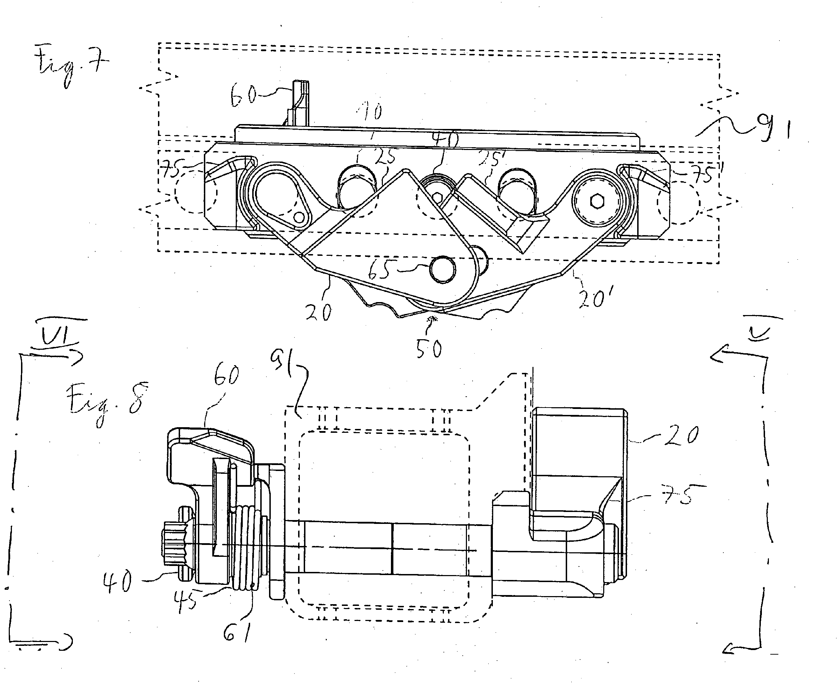

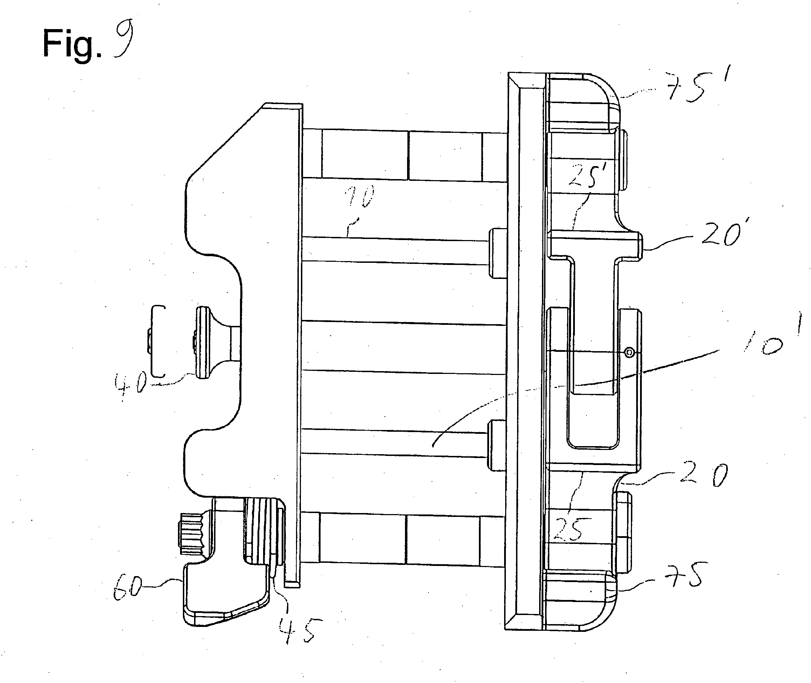

Das Riegelelement umfasst bevorzugt eine Feststellstange 40, mit der die Riegelnasen 20, 20' in der Verriegelungsstellung 51 festgestellt werden können. Die Feststellvorrichtung 40 ist in eine Verriegelungsstellung (siehe Fig. 9) durch eine nicht gezeigte Feder vorgespannt. Dadurch können die Riegelnasen 20, 20' in der Verriegelungsstellung 51 die Frachtstücke sichern. Das Riegelelement umfasst weiterhin zwei Montageplatten 70, 70', die über Befestigungseinrichtungen 10, 10' miteinander verbunden sind, die gleichzeitig zum Montieren des Riegelelementes an einer Schiene 91 dienen (siehe Fig. 4, 8). Durch das Betätigen eines Bewegungshebels 60, der über eine Feder 61 in die Ruhestellung vorgespannt ist, können die Riegelnasen 20, 20' aus der Ruhestellung 50 in die Verriegelungsstellung 51 bewegt werden.

Die in Fig. 3 gezeigte Ausführungsform eines Riegelelements umfasst zwei Anlaufschrägen 75, 75', die dafür sorgen, dass ein Frachtstück die Riegelnasen 20, 20' bzw. deren Drehgelenke nicht zerstört, wenn es unterhalb einer normalen Bewegungsebene auf das Riegelelement bewegt wird. Die beiden Anlaufschrägen 75, 75' setzen die jeweilige horizontale Bewegung des Frachtstücks in eine vertikale Bewegung um, und heben somit das Frachtstück an.

In Fig. 4 ist das Riegelelement an einer Schiene 91 am Laderaumboden befestigt. Die Schiene 91 ist eine (übliche) äußere Führungsschiene, die in Längsrichtung des Flugzeugs verläuft. In Fig. 4 befinden sich die beiden Riegelnasen 20, 20' in Verriegelungsstellung 51 zum Sichern von (hier nicht gezeigten) Frachtstücken. Die Anschlagfläche 25, 25' der beiden Riegelnasen 20, 20' in Verriegelungsstellung 51 zeigen in Längsrichtung des Flugzeugs und in zwei zueinander entgegen gesetzten Richtungen.

Bevorzugt wird das Frachtstück mit den Riegelnasen 20, 20' entlang der Längsrichtung des Flugzeugs gesichert, indem die Riegelnasen 20, 20' in Eingriffsausnehmungen 35 der Frachtstücke greifen. Das Frachtstück wird bevorzugt durch Riegelelemente nur an den äußeren Schienen in Längsrichtung des Flugzeugs (x) gesichert.

Fig. 5 zeigt eine Seitenansicht des Riegelelements. Die beiden Riegelnasen 20, 20' sind durch die Feststellvorrichtung 40 in der Verriegelungsposition festgestellt. Die Feststellvorrichtung 40 umfasst hier eine quer zur Schwenkebene der Riegelnasen 20, 20' bewegbare Feststellstange 40, die unter die Riegelnasen 20, 20' bewegt werden kann.

Fig. 6 zeigt eine Seitenansicht des Riegelelements aus der entgegen gesetzten Richtung wie Fig. 5. Die Feststellvorrichtung 40 in der Form einer Feststellstange, die sich über die komplette Breite des Riegelelements erstreckt, ist deutlich zu erkennen.

In Fig. 7 befinden sich die beiden Riegelnasen 20, 20' des gezeigten Riegelelements in einer abgesenkten Ruhestellung 50. In dieser Stellung können die Riegelnasen 20, 20' und das Riegelelement von Frachtstücken überfahren werden. Dies hat den Vorteil, dass das Riegelelement im Laderaum bzw. an den Schienen 91 befestigt bleiben kann, auch wenn es nicht benötigt wird, ohne dass es die Bewegung und/oder Sicherung der Frachtstücke behindert. Beispielsweise können die Riegelelemente derart an den Schienen 91 befestigt sein, dass die Abstände zweier Riegelnasen 20, 20' von zwei verschiedenen Riegelelementen an den definierten Positionen den Normen militärischer Frachtstücke entsprechen. Sollen in einem solchen Fall dann Frachtstücke nach zivilen Normen im Laderaum transportiert werden, so können die Riegelelemente im Laderaum befestigt bleiben. Die Riegelnasen 20, 20' können in die Ruhestellung 50 verschwenkt werden und das Riegelelement beeinträchtigt das Einladen und Befestigen von Frachtstücken nach zivilen Normen nicht.

Fig. 8 zeigt eine Längsansicht eines Riegelelements. Das Riegelelement umfasst vorzugsweise ein Bewegungsfederelement 45. Das Bewegungsfederelement 45 bewegt die Riegelnasen 20, 20' aus der Verriegelungsstellung 51 in die Ruhestellung 50, wenn die Feststellvorrichtung 40 die Riegelnasen 20, 20' nicht festsetzt. Durch Betätigen des Bewegungshebels 60 können die Riegelnasen 20, 20' aus der Ruhestellung 50 in die Verriegelungsstellung 51 bewegt werden. Die Position der Schiene 91, an dem das Riegelelement typischerweise befestigt ist, wird in Fig. 8 durch gestrichelte Linien angedeutet. Die Frachtstücke werden in Fig. 8 rechts von der Schiene bewegt und durch die gezeigte Riegelnase 20 in der Verriegelungsstellung 51 in Längsrichtung des Flugzeugs (x) gesichert.

Fig. 9 zeigt eine Aufsicht auf ein Riegelelement. Zu erkennen ist, dass in dieser Ausführungsform die Riegelnasen 20, 20' derart ausgebildet sind, dass Teile einer ersten Riegelnase in einer zweiten Riegelnase aufnehmbar sind. Die Feststellvorrichtung 40 in Fig. 9 hat die Riegelnasen 20, 20' festgestellt. Die Position der Feststellvorrichtung 40 zum Losstellen der Riegelnasen 20, 20' ist in Fig. 9 angedeutet.

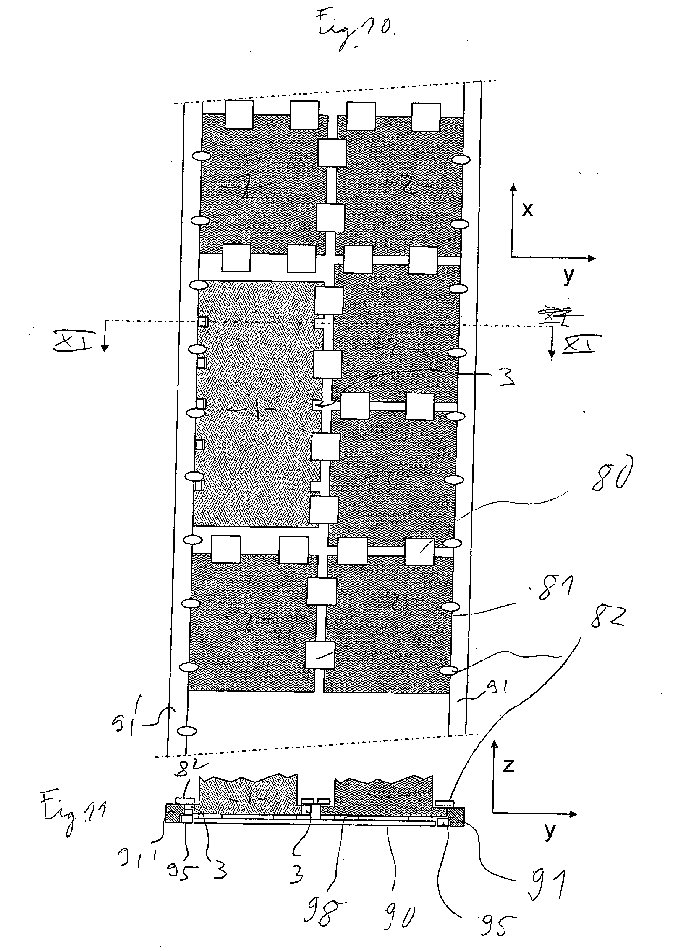

Fig. 10 zeigt einen Teil eines Laderaumbodens eines Flugzeugs mit Frachtstücken 2 nach zivilen Normgrößen sowie ein Frachtstück 1 nach militärischen Normen. Der Laderaumboden erstreckt sich in eine Längs- (x) und Querrichtung (y) des Flugzeugs. Die Frachtstücke 2 nach zivilen Normen sind durch X/Z-Riegel 80, Y/Z-Riegel 81 und Z-Riegel 82 am Laderaumboden 90 gesichert. Das Frachtstück 1 nach militärischen Normen ist durch Y/Z- 81 und Z-Riegel 82 sowie durch Riegelelemente der in der vorliegenden Anmeldung beschriebenen Art mit Riegelnasen 20, 20' in Verriegelungsstellung 51 in Längsrichtung des Flugzeugs, sogenannte X-Riegelelemente 95, gesichert, wobei die Riegelnasen 20, 20' in Ausnehmungen 3 am Frachtstück 1 eingreifen.

Fig. 11 zeigt einen Querschnitt des Laderaumbodens 90 entlang der Linie XI-XI der Fig. 10. Der Laderaumboden 90 umfasst neben den Riegelelementen 80 zum Sichern von Frachtstücken nach zivilen Normen in X-Richtung sowie Rollen 98 zur Bewegung der Frachtstücke 1, 2 auch Riegelelemente 95 der oben genannten Art zum Sichern von Frachtstücken 1 nach militärischen Normen. Die Riegelnasen 20, 20' der Riegelelemente der oben genannten Art, die sich an Stellen befinden, an denen Frachtstücke 2 nach zivilen Normen gesichert werden, befinden sich in abgesenkter Ruheposition (Fig. 11 rechts), um die Bewegung und Sicherung der Frachtstücke 2 nach zivilen Normen nicht zu beeinträchtigen. Typischerweise sind die Riegelelemente 95 (Fig. 11 links) der oben genannten Art zum Sichern von Frachtstücken 1 nach militärischen Normen an den Seitenschienen 91 befestigt, die üblicherweise im Laderaum vorgesehen sind.

### Bezugszeichenliste:

- 1, 2: Frachtstück
- 3: Ausnehmung
- 10, 10': Befestigungseinrichtung
- 12: Schiene
- 20, 20': Riegelnase
- 21, 21': Schwenkhebel
- 22, 22': Halteelement
- 25, 25': Anschlagfläche
- 30, 30': Anschlagrand
- 35: Eingriffsausnehmung
- 40: Feststellvorrichtung
- 45: Bewegungsfederelement
- 50: Ruhestellung
- 51: Verriegelungsstellung
- 60: Bewegungshebel
- 61: Feder
- 65: Verbindungsstift
- 66: Kulissenausnehmung
- 70, 70': Montageplatte
- 75, 75': Anlaufschrägen
- 80: X/Z-Riegel
- 81: Y/Z-Riegel
- 82: Z-Riegel
- 90: Laderaumboden
- 91: Seitenschiene
- 95: X-Riegelelement
- 98: Rollen

## Patentansprüche

1. Riegelelemente zum Sichern von Containern, Paletten oder dergleichen Frachtstücken in einem Laderaum eines Flugzeugs,
wobei die Frachtstücke Eingriffssausnehmungen (35) mit einander gegenüber liegenden Anschlagrändern (30, 30') aufweisen, in welche Riegelnasen (20, 20') in einer Verriegelungsstellung (51) eingreifen, die in eine Ruhestellung (50) zurückbewegbar sind,
wobei jedem Riegelelement ein Paar von Riegelnasen (20, 20') zugeordnet ist, die in der Verriegelungsstellung (51) mit jeweils einer Anschlagfläche (25, 26) an einen Anschlagrand (30, 30') der Eingriffsausnehmung (35) in Eingriff bringbar sind, wobei die Riegelnasen (20, 20') derart bewegbar gelagert sind, dass sich beide Anschlagflächen (25, 26) beim Bewegen von der Verriegelungsstellung (51) in die Ruhestellung (50) von den Anschlagrändern (30, 30') entfernen **dadurch gekennzeichnet, dass**
die Riegelnasen (20, 20') eines Paares derart gegenläufig miteinander durch einen Verbindungsstift (65) und eine Kulissenausnehmung (66) verbunden sind, dass beim Bewegen der einen Riegelnase (20, 20') die andere Riegelnase (20', 20) mitgenommen wird,
wobei das Riegelelement zwei dauerhaft feststehende Drehachsen aufweist, wobei jede der Riegelnasen (20, 20') eines Paares sich beim Bewegen von der Verriegelungsstellung (51) in die Ruhestellung (50) jeweils um eine der dauerhaft feststehenden Drehachsen dreht.

2. Riegelelement nach einem der vorhergehenden Ansprüche,
**dadurch gekennzeichnet,** dass
die Riegelnasen (20, 20') Schwenkhebel mit Halteelementen umfassen, an denen die Anschlagflächen (25, 26) ausgebildet sind.

3. Riegelelement nach einem der vorhergehenden Ansprüche,
**dadurch gekennzeichnet,** dass
die Riegelnasen (20, 20') in einer senkrechten Ebene verschwenkbar sind.

4. Riegelelement nach einem der vorhergehenden Ansprüche,
gekennzeichnet durch mindestens eine Feststellvorrichtung (40) zum Feststellen der Riegelnasen (20, 20') in der Verriegelungsstellung (51) und/oder der Ruhestellung (50).

5. Riegelelement nach einem der vorhergehenden Ansprüche, insbesondere nach Anspruch 4,
**dadurch gekennzeichnet,** dass
die Feststellvorrichtung (40) mindestens ein Feststellfederelement zum Einrasten der Feststellvorrichtung (40) bei der Verriegelungsstellung (51) und/oder Ruhestellung (50) der Riegelnasen (20, 20') umfasst.

6. Riegelelement nach einem der vorhergehenden Ansprüche,
**gekennzeichnet durch**
mindestens ein Bewegungsfederelement (45) zur Bewegung der Riegelnasen (20, 20') aus der Verriegelungsstellung (51) in die Ruhestellung (50).

7. Riegelelement nach einem der vorhergehenden Ansprüche,
**gekennzeichnet durch**
mindestens eine Anlaufschräge (75, 75') in Längsrichtung des Flugzeugs (x).

8. Riegelelement nach einem der vorhergehenden Ansprüche,
**gekennzeichnet durch**
mindestens einen Bewegungshebel (60) zum Bewegen der Riegelnasen (20, 20') aus der Ruhestellung (50) in die Verriegelungsstellung (51).

9. Riegelelement nach einem der vorhergehenden Ansprüche,
**dadurch gekennzeichnet,** dass
die Riegelnasen (20, 20') derart ausgebildet sind, dass Teile einer zweiten Riegelnase (20') in einem Zwischenraum einer ersten Riegelnase (20) derart aufnehmbar sind, dass die Anschlagflächen (25, 26) in der Verriegelungsposition parallel und fluchtend angeordnet sind.

10. Frachtraumboden eines Flugzeugs mit an den Rändern des Frachtraumes befestigten und in Längsrichtung des Flugzeugs (x) verlaufenden Schienen und Riegelelementen, die an den Schienen befestigt sind, zum Sichern von Containern auf dem Frachtraumboden, wobei die Riegelelemente solche zum Sichern von Containern nach militärischen Normen nach einem der Ansprüche 1-9 umfassen und auf einem Boden des Frachtraumes befestigte X/Z-Riegelelemente zum Sichern von Containern nach zivilen Normen vorgesehen sind.

11. Verwendung von Riegelelementen nach einem der Ansprüche 1-9 an den Rändern eines Frachtraumes eines Flugzeugs zum Sichern von Containern nach militärischen Normen in einer Längsrichtung des Flugzeugs (x) auf dem Frachtraumboden zusammen mit Riegelelementen zum Sichern von Containern nach zivilen Normen auf dem Frachtraumboden.

## Claims

1. Locking element for securing containers, pallets or similar items of cargo in a cargo hold of an aircraft,
wherein the items of cargo have engagement apertures (35) with mutually opposite stop edges (30, 30') in which locking lugs (20, 20') engage in a locking position (51), which locking lugs are movable back into a rest position (50),
wherein each locking element is associated with a pair of locking lugs (20, 20') which in the locking position (51) can each be brought by means of a respective stop face (25, 26) into engagement against a stop edge (30, 30') of the engagement aperture (35), the locking lugs (20, 20') being mounted so as to be movable in such a way that on movement from the locking position (51) to the rest position (50) both stop faces (25, 26) move away from the stop edges (30, 30'),
**characterised in that**
the locking lugs (20, 20') of a pair are connected to one another by a connecting pin (65) and a guide opening (66) so as to act in opposite directions in such a way that when one locking lug (20, 20') moves the other locking lug (20', 20) is moved therewith,
the locking element having two permanently fixed hinge pins,
wherein each of the locking lugs (20, 20') of a pair, on movement from the locking position (51) to the rest position (50), rotates about one of the permanently fixed hinge pins.

2. Locking element according to one of the preceding claims,
**characterised in that**
the locking lugs (20, 20') comprise pivoted levers with holding elements, on which the stop faces (25, 26) are formed.

3. Locking element according to either one of the preceding claims,
**characterised in that**
the locking lugs (20, 20') are pivotable in a vertical plane.

4. Locking element according to any one of the preceding claims,
**characterised** by at least one fixing device (40) for fixing the locking lugs (20, 20') in the locking position (51) and/or the rest position (50).

5. Locking element according to any one of the preceding claims, especially according to claim 4,
**characterised** in that
the fixing device (40) comprises at least one fixing spring element for engagement of the fixing device (40) when the locking lugs (20, 20') are in the locking position (51) and/or rest position (50).

6. Locking element according to any one of the preceding claims,
**characterised** by
at least one movement spring element (45) for movement of the locking lugs (20, 20') from the locking position (51) to the rest position (50).

7. Locking element according to any one of the preceding claims,
**characterised** by
at least one run-up slope (75, 75') in the longitudinal direction of the aircraft (x).

8. Locking element according to any one of the preceding claims,
**characterised** by
at least one movement lever (60) for movement of the locking lugs (20, 20') from the rest position (50) to the locking position (51).

9. Locking element according to any one of the preceding claims,
**characterised in that**
the locking lugs (20, 20') are constructed in such a way that parts of a second locking lug (20') can be received in an intermediate space in a first locking lug (20) in such a way that in the locking position the stop faces (25, 26) are arranged in parallel and in alignment.

10. Cargo hold floor of an aircraft having rails that are attached at the edges of the cargo hold and run in the longitudinal direction of the aircraft (x), and locking elements, which are attached to the rails, for securing containers on the cargo hold floor, wherein the locking elements comprise locking elements for securing containers in accordance with military standards according to any one of claims 1 to 9, and X/Z locking elements attached to a floor of the cargo hold are provided for securing containers in accordance with civilian standards.

11. Use of locking elements according to any one of claims 1 to 9 at the edges of a cargo hold of an aircraft for securing containers in accordance with military standards in a longitudinal direction of the aircraft (x) on the cargo hold floor together with locking elements for securing containers in accordance with civilian standards on the cargo hold floor.

## Revendications

1. Élément de verrouillage pour la fixation de conteneurs, de palettes ou de colis analogues dans une soute d'un avion,
dans lequel les colis présentent des évidements d'accrochage (35) avec des bords de butée (30, 30') opposés l'un à l'autre, dans lesquels s'engagent des ergots de verrouillage (20, 20') dans une position de verrouillage (51), qui peuvent être ramenés dans une position de repos (50),
dans lequel une paire d'ergots de verrouillage (20, 20') est associée à chaque élément de verrouillage, lesquels peuvent être amenés en prise, dans la position de verrouillage (51), respectivement avec une face de butée (25, 26) sur un bord de butée (30, 30') de l'évidement d'accrochage (35), dans lequel les ergots de verrouillage (20, 20') sont montés de façon mobile, de telle manière que les deux faces de butée (25, 26) s'éloignent des bords de butée (30, 30') lors du mouvement de la position de verrouillage (51) à la position de repos (50),
**caractérisé en ce que** les ergots de verrouillage (20, 20') d'une paire soient reliés l'un à l'autre en sens contraire par une tige de liaison (65) et un évidement de coulisse (66), **en ce qu'**un ergot de verrouillage (20, 20') est entraîné lors d'un mouvement de l'autre ergot de verrouillage (20', 20),
dans lequel l'élément de verrouillage présente deux axes de rotation stationnaires en permanence,
dans lequel chacun des ergots de verrouillage (20, 20') d'une paire tourne respectivement autour de l'un des axes de rotation stationnaires en permanence lors du mouvement de la position de verrouillage (51) à la position de repos (50).

2. Élément de verrouillage selon la revendication précédente, **caractérisé en ce que** les ergots de verrouillage (20, 20') comprennent des leviers pivotants avec des éléments de maintien, sur lesquels les faces de butée (25, 26) sont formées.

3. Élément de verrouillage selon l'une quelconque des revendications précédentes, **caractérisé en ce que** les ergots de verrouillage (20, 20') peuvent pivoter dans un plan vertical.

4. Élément de verrouillage selon l'une quelconque des revendications précédentes, **caractérisé par** au moins un dispositif de blocage (40) pour le blocage des ergots de verrouillage (20, 20') dans la position de verrouillage (51) et/ou la position de repos (50).

5. Élément de verrouillage selon l'une quelconque des revendications précédentes, en particulier la revendication 4, **caractérisé en ce que** le dispositif de blocage (40) comprend au moins un élément à ressort de blocage pour l'encliquetage du dispositif de blocage (40) lors de la position de verrouillage (51) et/ou de la position de repos (50) des ergots de verrouillage (20, 20').

6. Élément de verrouillage selon l'une quelconque des revendications précédentes, **caractérisé par** au moins un élément à ressort de mouvement (45) pour mouvoir les ergots de verrouillage (20, 20') de la position de verrouillage (51) à la position de repos (50).

7. Élément de verrouillage selon l'une quelconque des revendications précédentes, **caractérisé par** au moins une rampe d'engagement (75, 75') dans la direction longitudinale de l'avion (x).

8. Élément de verrouillage selon l'une quelconque des revendications précédentes, **caractérisé par** au moins un levier de mouvement (60) pour mouvoir les ergots de verrouillage (20, 20') de la position de repos (50) à la position de verrouillage (51).

9. Élément de verrouillage selon l'une quelconque des revendications précédentes, **caractérisé en ce que** les ergots de verrouillage (20, 20') sont configurés de telle manière que des parties d'un deuxième ergot de verrouillage (20') puissent se loger dans un espace intermédiaire d'un premier ergot de verrouillage (20), de telle manière que les faces de butée (25, 26) soient disposées parallèlement et au même niveau dans la position de verrouillage.

10. Plancher de soute d'un avion avec des rails fixés sur les bords de la soute et s'étendant en direction longitudinale de l'avion (x) et des éléments de verrouillage, qui sont fixés aux rails, pour la fixation de conteneurs au plancher de soute, dans lequel les éléments de verrouillage comprennent des éléments selon l'une quelconque des revendications 1 à 9 pour la fixation de conteneurs selon des normes militaires et dans lequel il est prévu des éléments de verrouillage X/Z fixés à un plancher de la soute pour la fixation de conteneurs selon des normes civiles.

11. Utilisation d'éléments de verrouillage selon l'une quelconque des revendications 1 à 9 sur les bords d'une soute d'un avion pour la fixation de conteneurs selon des normes militaires dans une direction longitudinale de l'avion (x) sur un plancher de la soute ainsi que des éléments de verrouillage pour la fixation de conteneurs selon des normes civiles sur le plancher de la soute.
